# EUROPÄISCHE PATENTSCHRIFT

(11) **EP 0 616 016 B1**
(45) Veröffentlichungstag und Bekanntmachung des Hinweises auf die Patenterteilung: **30.06.1999**
(21) Anmeldenummer: 93104142.0
(22) Anmeldetag: 13.03.1993
(51) Int. Cl.: C09D 9/00

(54) **Abbeizmittel**
Stripping agent
Agent de décapage

(43) Veröffentlichungstag der Anmeldung: 21.09.1994
(73) Patentinhaber: Scheidel GmbH & Co. KG, 96114 Hirschaid (DE)
(72) Erfinder: Reinecke, Werner, D-96114 Hirschaid (DE)
(74) Vertreter: Thiel, Christian, Dr. Dipl.-Chem.

(56) Entgegenhaltungen:
- EP-A- 518 634
- EP-A- 0 407 952
- EP-A- 0 442 271
- WO-A-94/17144
- DE-A- 4 027 463
- Römmp Chemie Lexikon, S.3, "Abbeizmittel".

## Beschreibung

Die Erfindung betrifft ein Abbeizmittel, insbesondere für Fassaden, auf Basis chlorfreier organischer Lösungsmittel, das daneben Netzmittel, Emulgatoren, Verdickungsmittel u. a. übliche Zusätze enthält.

Das Anstreichen von Fassaden hat in den letzten Jahren an Bedeutung gewonnen, nicht nur aus optischen Gründen, sondern insbesondere auch als Schutz gegen Wettereinwirkung und insbesondere die Einwirkung von Luftschadstoffen. Gleichermaßen hat die Notwendigkeit zur Entfernung alter Farbschichten an Gebäudefassaden zugenommen.

Durch wiederholtes Überstreichen von Fassaden über Jahrzehnte hinweg und durch den zunehmenden Angriff von Luftschadstoffen büßen alte Farbschichten zunehmend ihre Tragfähigkeit und ihre Schutzwirkung ein. Vor dem Auftrag neuer Schutzschichten ist deshalb eine Entfernung und vollständige Reinigung erforderlich. In aller Regel sind hierzu chemische Abbeizmittel erforderlich.

Die Erfindung eignet sich ebenfalls zur Entfernung von Graffitis von beschichteten und unbeschichteten Untergründen. Auch ein Einsatz in Entlackungsbädern ist möglich.

Zur Entfernung vorhandener Anstrichschichten wird die Fassade mit dem Abbeizmittel beschichtet und nach der erforderlichen Einwirkzeit, in der die Farbschichten durchdrungen und vom Untergrund abgehoben werden müssen, mit einem Hochdruckreiniger mit Wasser abgewaschen, in den meisten Fällen mit heißem Wasser. Das Abwässer enthält dann das Abbeizmittel und die Farbreste und muß, entsprechend den örtlichen behördlichen Vorschriften, entsorgt werden.

Mehr als 90 % der auf dem Markt befindlichen Abbeizmittel enthalten Dichlormethan als hauptsächliches organisches Lösungsmittel, in der Regel etwa 70 bis 85 %. Dies bedeutet, daß alleine in Deutschland jährlich etwa 6000 bis 9000 T Chlorkohlenwasserstoffe aus Abbeizmitteln, vor allem Dichlormethan, in die Umwelt gelangt. Es wird inzwischen nicht mehr ausgeschlossen, daß Dichlormethan in der Atmosphäre aufsteigt und in den Ozonabbaumechanismus eingreift.

Zudem stehen Chlorkohlenwasserstoff generell und Dichlormethan speziell im Verdacht, karzinogen zu sein.

Aus diesen Gründen wurde eine TRGS "Dichlormethan" erstellt, die die Verwendung von Chlorkohlenwasserstoffen in Abbeizmitteln stark einschränken soll. Die TRGS wird voraussichtlich noch im Jahre 1993 in Kraft treten.

Um diesen Bedenken Rechnung zu tragen, wurden in den vergangenen Jahren eine Reihe von Ersatzprodukten für chlorkohlenwasserstoffhaltige Abbeizer entwickelt und auf den Markt gebracht. Diese Abbeizmittel auf Basis chlorfreier Lösungsmittel konnten sich zwar am Markt etablieren, die chlorkohlenwasserstoffhaltigen Produkte im Bereich der Fassadenabbeizer aber nicht verdrängen. Diese nehmen nach wie vor das bei weitem größte Marktsegment ein. Derartige Abbeizer sind beispielsweise aus der EP-A-0 407 952 bekannt, wo wasserlösliche mit wasser unlösliehen Lösungsmitteln kombiniert werden. Diese neu entwickelten chlorfreien Abbeizer enthalten meist hochsiedende Lösungsmittel. Dies bedingt eine geringere Luftbelastung als bei den bekannten Abbeizers auf Chlorkohlenwasserstoffbasis. Hinzu kommen Vorteile bei der biologischen Abbaubarkeit der dazu verwandten Lösungsmittel.

Allerdings bergen auch diese chlorfreien Abbeizer noch erhebliche Probleme, die sich vor allem dann einstellen, wenn sie ins Abwasser gelangen. Dies ist aber dann unvermeidlich, wenn mit einem Entschichtungsmittel versehene Fassaden mit einem Hochdruckreiniger mit heißem Wasser gereinigt werden. Die vom Wasser aufgenommenen Lösungsmittelanteile stellen eine sehr starke Belastung des Kanalsystems und der Kläranlagen dar, was zu vorzeitiger Korrosion der Anlagen und zum Absterben der in den biologischen Kläranlagen eingesetzten Mikroorganismen führen kann. Eine zunehmende Zahl von Kläranlagenbetreibern untersagen deshalb die Einleitung von Abbeiz-Abwässern grundsätzlich. In Gegenden, in denen dies der Fall ist, müssen dann die mit Lösungsmittel und Farbabfällen belasteten Abwässer, je nach Objekt zwischen 3 und 30 T, als Sondermüll entsorgt werden. Die dabei anfallenden Mengen Sondermüll sind einerseits kaum zu bewältigen und andererseits ein erheblicher Kostenfaktor.

Aufgabe der Erfindung ist daher die Entwicklung eines Abbeiz- oder Entschichtungsmittels, das es erlaubt, beim Abbeizen von Fassaden die anfallenden Lösemittel- und farbschlammhaltigen Abwässer bereits am Entstehungsort so aufzutrennen, daß die Farbschlämme allein dem Haus- oder Sondermüll beigegeben werden können, Lösemittel gesammelt und von Wasser getrennt dem Recycling zugeführt werden können und das Abwasser im wesentlichen frei von Belastung durch Farbschlämmen und Lösemitteln in die normale Kanalisation eingeleitet werden kann. Zugleich soll das in dem Abbeizmittel enthaltene Lösungsmittel den Bestimmungen zu Arbeitsplatz- und Umweltschutz Rechnung tragen und dabei eine für die Praxis annehmbare Abbeizwirkung entfalten.

Dieses Ziel wird mit einem Abbeizmittel der eingangs genannten Art erreicht, bei dem das oder die organischen Lösungsmittel eine Löslichkeit in Wasser von weniger als 0,5 Gew.-% bei 20°C besitzen und die Lösemittel phase einen Fettsäurealkylester enthält.

Das erfindungsgemäße Abbeizmittel setzt sich insbesondere aus mehreren organischen Lösungsmitteln zusammen, die eine Löslichkeit in Wasser - bei 20° C - von ≤ 0,2 Gew.-% besitzen.

Die derart bezeichneten organischen Lösungsmittel machen zweckmäßigerweise 80 bis 95 Gew.-% der Lösemittel aus. Die verbleibenden 5 bis 20 % der Lösemittel bestehen aus unter den genannten Gesichtspunkten unbedenklichen Flüssigkeiten, insbesondere Wasser.

Besonders geeignete Lösungsmittel für die erfindungsgemäßen Abbeizmittel sind Kohlenwasserstoffe, Ester, Alkohole, Ketone, Glykolether, Glykoletheracetate oder Mischungen von Verbindungen dieser Klassen oder dieser Klassen untereinander.

Bevorzugte Ester sind Oxo-Acetate, Alkylpropionate und Dicarbonsäuredialkylester.

Als Kohlenwasserstoffe kommen insbesondere entaromatisierte Benzine, Terpenkohlenwasserstoffe, Isoparaffine sowie geruchsarme und schwerflüchtige aromatische Kohlenwasserstoffe in Frage. Aus Gründen des Explosionsschutzes haben die Lösemittel zweckmäßigerweise einen Flammpunkt von mehr als 21° C.

Geeignete Ketone sind insbesondere Diisobutylketon und Diisoamylketon.

Als Alkohole kommen aliphatische Alkohole, insbesondere ≥ C₇, und verschiedene cyclische Alkohole in Betracht, so z. B. 2-Ethylhexanol, Isodecylalkohol und Terpenalkohole.

Als Glykolether kommen Mono-, Di- und Tripropylenglykoldialkylether in Frage. Besonders geeignet sind Propylen-, Dipropylen-und Tripropylenglykolmethylbutylether.

Als Glykoletheracetat ist insbesondere Propylenglykol-n-butyl-etheracetat geeignet, ferner auch die Di- und Tripropylenglykolanalogen.

Erfindungsgemäß können anionische, und/oder nichtionische Tenside eingesetzt werden. Beispiele hierfür sind Salze von Sulfobernsteinsäureestern und Fettalkoholpolyglykolether. Besonders geeignet ist aber eine Kombination eines Tensids mit vorwiegend benetzenden Eigenschaften mit einem Tensid mit vorwiegend emulgierender Wirkung, beispielsweise eines Salzes eines Sulfobernsteinsäureesters mit einem Fettalkoholpolyglykolether. Der Sulfobernsteinsäureester wirkt dabei vor allem als Netzmittel, während der Fettalkoholpolyglykolether emulgierend wirkt. Nicht geeignet sind Seifen, da die emulgierende Wirkung zu lang anhaltend ist.

Das erfindungsgemäße Abbeizmittel enthält zur Einstellung der Viskosität übliche Verdickungsmittel. Zweckmäßigerweise sind dies Cellulosederivate, Bentonite oder pyrogene Kieselsäure. Xanthanverbindungen können ebenfalls eingesetzt werden. Besonders geeignet sind Ethylhydroxyethylcellulose und pyrogene Kieselsäure, vorzugsweise in Kombination. Xanthane in 0,5 bis 1,0 %-iger wäßriger Lösung können in einer Menge von 5 bis 20 Gew.-%, zusätzlich zum organischen Lösungsmittel, enthalten sein.

Der erfindungsgemäße Abbeizer besteht in der Praxis aus den genannten chlorfreien und wenig in Wasser löslichen Lösungsmitteln, ggf. Wasser, Tensiden, Verdickungsmitteln u. a. geeigneten Zusätzen, beispielsweise Paraffin oder Wachs zur Erniedrigung der Abdunstgeschwindigkeit in Entlackungsbädern. Zeolithe oder Chelatbildner zur Bindung gelöster Schwermetalle lassen sich ebenfalls zusetzen. Die Tenside sichern die Benetzbarkeit der Fassade und verbessern die Entfernbarkeit des angelösten Anstrichs von der Fassade mit heißem Wasser. Im Gegesatz zu herkömmlichen Fassaden-Abbeizmitteln läßt sich aber die erfindungsgemäße Lösemittel/Tensidkombination ohne Zusatz von Mitteln zur Emulsionsspaltung wieder aus der wäßrigen Phase abtrennen, so daß nur noch Spuren von Lösemittel im Abwasser vorhanden sind. Hierzu trägt überraschend vor allem die Kombination der für sich genommenen gebräuchlichen anionischen und nichtionischen Tenside bei.

Die Kombination aus Sulfobernsteinsäureestersalz und Fettalkoholpolyglykolether mit niedrigem Ethoxylierungsgrad ermöglicht dabei sowohl die Mischbarkeit als auch die anschließende schnelle Trennung von wäßriger und organischer Phase. Dabei wirkt der Sulfobernsteinsäureester vor allem als Netzmittel für das porentiefe Entfernen der gequollenen Anstrichschichten und der Fettalkoholpolyglykolether als Emulgator.

Der Abbeizer gemäß der Erfindung ist zweckmäßigerweise neutral bis leicht alkalisch eingestellt, vorzugsweise neutral.

Das Abwasser trennt sich relativ schnell in Farbschlamm, organische Phase und wäßrige Phase. Das Netzmittel geht dabei überwiegend in die wäßrige Phase.

Weiterhin ist völlig überraschend, daß der Zusatz von Verdickungsmitteln geeignet ist, die Phasentrennung außerordentlich zu beschleunigen.

Beim Einsatz von Celluloseethern und pyrogener Kieselsäure in Kombination wurden im Feldversuch Trennzeiten von ca. 15 bis 30 Minuten erzielt. Dabei wurde völlig überraschend eine Adsorption von Lösungsmittel und Emulgator an den Verdickungsmitteln gefunden. Zusammen mit dem entfernten Farbanstrich bildet sich ein Schlamm, der schnell koaguliert. Die Lösemittel bilden keine eigene Phase mehr.

Das dabei entstehende Abwasser enthält nur noch Lösungsmittelspuren und kann direkt in die Schmutzwasserkanalisation eingeleitet werden. Bei Einsatz von jetzt schon gebräuchlichen mobilen Abwasserreinigungsanlagen kann das Abwasser sogar im Kreislauf geführt werden, d. h. das getrennte Abwasser wird dem Hochdruckreiniger als Frischwasser zugeführt.

Die vom Abwasser abgetrennten Lösemittel lassen sich durch Filtration oder Zentrifugieren von den Feststoffen abtrennen und als Regenerat wiederverwenden. Die Feststoffe werden, je nach Zusammensetzung, dem Haus- oder Sondermüll zugeführt.

Die Erfindung wird durch die nachfolgenden Rezepturen näher erläutert.

### Beispiele 1 bis 4

Es wurden Abbeizer mit den folgenden Rezepturen hergestellt, wobei die Zusammensetzung in Gew.-Teilen angegeben ist.

Besonders überraschend war die Abbeizwirkung des Fettsäuremethylesters. Selbst als einziges Lösemittel in der Rezeptur ergab sich eine hervorragende Wirkung.

| Rezepturen | | | | |
|---|---|---|---|---|
| | 1 | 2 | 3 | 4 |
| Diisobutylketon | - | 10 | - | - |
| Ölsäuremethylester | 20 | 20 | 30 | 90 |
| Exxate 700 (Oxoacetate) | 20 | 30 | 30 | - |
| Coasol B (Ester-Gemisch) | 20 | - | - | - |
| Exxol D60 (KWs, aromatenfrei) | 10 | - | - | - |
| Ethylhexylacetat | 20 | 30 | 30 | - |
| Tensid, anionisch | 1 | 2 | 2 | 2 |
| Tensid, nichtionisch | 3 | 1 | 1 | 1 |
| Pyrogene Kieselsäure | 5 | 5 | 5 | 5 |
| Ethylhydroxyethylcellulose | 0,5 | 0,5 | 0,5 | 0,5 |
| Tixogel (Bentone-Typ) | 1 | 1 | 1 | 1 |
| Xanthan-Lsg., 0,6 % in Wasser | 10 | 10 | 10 | 10 |

Die Bestandteile wurden zusammengerührt, indem die Verdickungsmittel in der Lösemittelmischung dispergiert und/oder gelöst werden. Tenside und ggf. die wäßrige Lösung werden zum Schluß zugegeben. Es ergibt sich ein viskoses, streich- und pumpfähiges Gel, das mittels üblichen Werkzeugs auf Fassaden aufgebracht werden konnte und haften blieb. Nach einer Einwirkzeit von 15 bis 240 Minuten je nach Zusammensetzung des zu entfernenden Anstrichs und der Temperaturbedingungen, war die Farbschicht vollständig durchdrungen und konnte die Abbeizmittel/Farbschicht-Mischung ohne weiteres mit heißem Wasser unter Druck abgespült werden.

Das Spülwasser mit dem Schlamm aus Abbeizer und Farbresten wurde auf übliche Weise aufgefangen und einem Behälter zugeleitet. Nach 15 Minuten hatte sich auf dem Spülwasser eine Schicht aus koaguliertem Farbschlamm abgesetzt. Der Farbschlamm wurde abfiltriert.

Die wäßrige Phase enthielt weniger als 0,2 % organisches Lösemittel neben Netzmittelanteilen. Die Lösemittel konnten durch Druckfiltration leicht von dem Farbschlamm abgetrennt werden. Den gleichen Zweck erfüllt auch eine Zentrifuge.

## Patentansprüche

1. Abbeizmittel, insbesondere für Fassaden, auf Basis chlorfreier organischer Lösungsmittel, das daneben Netzmittel, Emulgatoren, Verdickungsmittel und andere übliche Zusätze enthält, dadurch gekennzeichnet, daß das oder die organischen Lösungsmittel eine Löslichkeit in Wasser von weniger als 0,5 Gew.-% bei 20°C besitzen und daß die Lösemittelphase einen Fettsäurealkylester enthält.

2. Abbeizmittel nach Anspruch 1, dadurch gekennzeichnet, daß das oder die organischen Lösungsmittel eine Löslichkeit in Wasser bei 20°C von ≤ 0,2 Gew.-% besitzen.

3. Abbeizmittel nach Anspruch 1 oder 2, dadurch gekennzeichnet, daß das oder die organischen Lösungsmittel 30 bis 95 Gew.-% der flüssigen Phase ausmachen.

4. Abbeizmittel nach einem der Ansprüche 1 bis 3, dadurch gekennzeichnet, daß es Kohlenwasserstoffe, Alkohole, Ester, Ketone, Glykolether, Glykoletheracetate oder Mischungen davon enthält.

5. Abbeizmittel nach Anspruch 4, dadurch gekennzeichnet, daß es aliphatische und/oder alicyclische Alkohole enthält, insbesondere 2-Ethylhexanol oder Isodecylalkohol.

6. Abbeizmittel nach Anspruch 4 oder 5, dadurch gekennzeichnet, daß es Oxo-Acetate, Alkylpropionate und/oder Dicarbonsäuredialkylester, enthält.

7. Abbeizmittel nach einem der Ansprüche 4 bis 5, dadurch gekennzeichnet, daß es entaromatisierte Benzine, Terpenkohlenwasserstoffe, Isoparaffine und/oder geruchsarme und schwerflüchtige aromatische Kohlenwasserstoffe enthält.

8. Abbeizmittel nach einem der Ansprüche 4 bis 7, dadurch gekennzeichnet, daß es Diisobutylketon und/oder Diisoamylketon, enthält.

9. Abbeizmittel nach einem der Ansprüche 4 bis 8, dadurch gekennzeichnet, daß es Mono-, Di- und/oder Tripropylenglykoldialkylether enthält, insbesondere Propylenglykolmethylbutylether, Dipropylenglykolmethylbutylether und Tripropylenglykolmethylbutylether.

10. Abbeizmittel nach einem der Ansprüche 4 bis 9, dadurch gekennzeichnet, daß es propylenglykol-n-butyletheracetat enthält.

11. Abbeizmittel nach einem der Ansprüche 1 bis 10, dadurch gekennzeichnet, daß es eine Kombination aus Tensiden mit -vorwiegend benetzenden Eigenschaften und mit vorwiegend emulgierenden Eigenschaften enthält.

12. Abbeizmittel nach Anspruch 11, dadurch gekennzeichnet, daß es als Tenside das Salz eines Sulfobernsteinsäureesters und einen Fettalkoholpolyglykolether enthält.

13. Abbeizmittel nach einem der vorstehenden Ansprüche, dadurch gekennzeichnet, daß es als Verdickungsmittel Cellulosederivate, pyrogene Kieselsäure, Bentonit und/oder Xanthane enthält.

14. Abbeizmittel nach Anspruch 13, dadurch gekennzeichnet, daß es als Verdickungsmittel eine Kombination aus Ethylhydroxyethylcellulose und pyrogener Kieselsäure enthält.

15. Abbeizmittel nach Anspruch 13 oder 14, dadurch gekennzeichnet, daß es 5 bis 20 Gew,-% einer 0,5 bis 1,0 %-igen wäßrigen Xanthanlösung enthält.

16. Verwendung der Zubereitung eines der vorstehenden Ansprüche als Abbeizmittel.

## Claims

1. Paint remover, particularly for facades, based on chloride-free organic solvents which, in addition to wetting agents, includes emulsifiers, thickening agents and other conventional additives, characterised in that the organic solvent(s) have a solubility in water of less than 0.5% by wt. and that the solvent phase includes a fatty acid alkyl ester.

2. Paint remover as claimed in Claim 1, characterised in that the organic solvent(s) have a solubility in water at 20°C of ≤ 0.2% by wt.

3. Paint remover as claimed in Claim 1 or 2, characterised in that the organic solvent(s) constitute 80 to 95% by wt. of the liquid phase.

4. Paint remover as claimed in one of Claims 1 to 3, characterised in that it contains hydrocarbons, alcohols, esters, ketones, glycol ethers, glycol ether acetates or mixtures thereof.

5. Paint remover as claimed in Claim 4, characterised in that it includes aliphatic and/or alicyclic alcohols, particular 2-ethyl hexanol or isodecyl alcohol.

6. Paint remover as claimed in Claim 4 or 5, characterised in that it includes oxo-acetates, alkyl propionates and/or dicarbonic acid dialkyl esters.

7. Paint remover as claimed in one of Claims 4 to 6, characterised in that it includes dearomatised benzenes, terpene hydrocarbons, isoparaffins and/or low-odour and low-volatility aromatic hydrocarbons.

8. Paint remover as claimed in one of Claims 4 to 7, characterised in that it includes diisobutyl ketone and/or diisoamyl ketone.

9. Paint remover as claimed in one of Claims 4 to 8, characterised in that it includes mono-, di- and/or tripropylene glycol dialkyl ether, in particular propylene glycol methyl butyl ether, dipropylene glycol methyl butyl ether and tripropylene glycol methyl butyl ether.

10. Paint remover as claimed in one of Claims 4 to 9, characterised in that it includes propylene glycol-n-butyl ether acetate.

11. Paint remover as claimed in one of Claims 1 to 10, characterised in that it includes a combination of tensides with predominantly wetting properties and with predominantly emulsifying properties.

12. Paint remover as claimed in Claim 11, characterised in that it includes the salt of a sulphosuccinic acid ester and a fatty alcohol polyglycol ether as the tensides.

13. Paint remover as claimed in one of the preceding claims, characterised in that it includes cellulose derivatives, pyrogenic silica, bentonite and/or xanthan as the thickening agent.

14. Paint remover as claimed in Claim 13, characterised in that it includes a combination of ethyl hydroxyethyl cellulose and pyrogenic silica as the thickening agent.

15. Paint remover as claimed in Claim 13 or 14, characterised in that it includes 5 to 20% by wt. of a 0.5 to 1.0% aqueous xanthan solution.

16. Use of the preparation as claimed in one of the preceding claims as a paint remover.

## Revendications

1. Décapant, notamment pour des façades, à base de solvants organiques exempts de chlore et comprenant en outre des agents mouillants, des émulsifiants, des épaississants et d'autres additifs usuels, caractérisé en ce que le ou les solvants organiques possèdent une solubilité dans l'eau inférieure à 0,5 % en poids à 20 °C et en ce que la phase solvant contient un ester alkylique d'acide gras.

2. Décapant selon la revendication 1, caractérisé en ce que le ou les solvants organiques possèdent une solubilité dans l'eau inférieure ou égale à 0,2 % en poids à 20 °C.

3. Décapant selon la revendication 1 ou 2, caractérisé en ce que le ou les solvants organiques représentent de 80 à 95 % en poids de la phase liquide.

4. Décapant selon l'une des revendications 1 à 3, caractérisé en ce qu'il contient des hydrocarbures, des alcools, des esters, de cétones, des éthers de glycols, des acétates d'éther de glycols ou des mélanges de ces substances.

5. Décapant selon la revendication 4, caractérisé en ce qu'il contient des alcools aliphatiques et/ou alicycliques, notamment du 2-éthylhexanol ou de l'alcool isodécylique.

6. Décapant selon la revendication 4 ou 5, caractérisé en ce qu'il contient des oxoacétates, des propionates d'alkyles et/ou des carboxylates d'allyle.

7. Décapant selon l'une des revendications 4 à 6, caractérisé en ce qu'il contient des essences désaromatisées, des hydrocarbures terpéniques, des isoparaffines et/ou des hydrocarbures aromatiques peu volatils à odeur faible.

8. Décapant selon l'une des revendications 4 à 7, caractérisé en ce qu'il contient de la diisobutylcétone et/ou de la diisoamylcétone.

9. Décapant selon l'une des revendications 4 à 8, caractérisé en ce qu'il contient des éthers alkyliques de mono-, di- ou tripropylène glycol, notamment du méthylbutyléther de propylène glycol, du méthylbutyléther de dipropylène glycol et du méthylbutyléther de tripropylène glycol.

10. Décapant selon l'une des revendications 4 à 9, caractérisé en ce qu'il contient du n-butylétheracétate de propylène glycol.

11. Décapant selon l'une des revendications 1 à 10, caractérisé en ce qu'il contient une association d'agents de surface avec des propriétés majoritairement mouillantes et avec des proprietés majoritairement émulsifiantes.

12. Décapant selon la revendication 11, caractérisé en ce qu'il contient comme agents de surface le sel d'un ester de l'acide sulfosuccinique et d'un polyglycoléther d'alcool gras.

13. Décapant selon l'une des revendications précédentes, caractérisé en ce qu'il contient comme épaississant des dérivés de la cellulose, de l'acide silicique pyrogène, de la bentonite et/ou des xanthanes.

14. Décapant selon la revendication 13, caractérisé en ce qu'il contient comme épaississant une association d'hydroxyéthylcellulose et d'acide silicique pyrogène.

15. Décapant selon la revendication 13 ou 14, caractérisé en ce qu'il contient de 5 à 20 % en poids d'une solution aqueuse de xanthane allant de 0,5 à 1,0 %.

16. Utilisation de la préparation selon l'une des revendications précédentes comme décapant.
